# EUROPÄISCHE PATENTANMELDUNG

(11) **EP 2 101 025 A2**
(43) Veröffentlichungstag der Anmeldung: **16.09.2009**
(21) Anmeldenummer: 08105968.5
(22) Anmeldetag: 11.12.2008
(51) Int. Cl.: E05F 15/16

(54) **Elektromotor sowie Schleifkontakthalter**

(30) Priorität: 11.03.2008 DE 102008000593
(71) Anmelder: ROBERT BOSCH GMBH, 70442 Stuttgart (DE)
(72) Erfinder: Haussecker, Walter, 77830 Buehlertal (DE); Tasch, Franz, 76287 Rheinstetten (DE); Schroeder, Patrick, 77815 Buehl (DE)

(57) **Zusammenfassung**

Die Erfindung betrifft einen Elektromotor (1), insbesondere für Kraftfahrzeuganwendungen, vorzugsweise Fensterhebermotor, mit einem drehfest auf einer Ankerwelle (2) angeordneten Kommutator (4) und mit einer Leiterplatte (12). Erfindungsgemäß ist vorgesehen, dass zwischen dem Kommutator (4) und der Leiterplatte (12) eine Schutzwand (16) angeordnet ist. Ferner betrifft die Erfindung einen Schleifkontakthalter (10).

## Beschreibung

### Stand der Technik

Die Erfindung betrifft einen Elektromotor gemäß dem Oberbegriff des Anspruchs 1 sowie einen Schleifkontakthalter gemäß dem Oberbegriff des Anspruchs 10.

Es sind als Fensterhebermotor ausgebildete Gleichstrommotoren bekannt, die über eine Schneckenverzahnung ein Abtriebszahnrad antreiben. Die Bestromung des Elektromotors erfolgt dabei über unterschiedlich gepolte Schleifkontakte (i. d. R. Kohlebürsten), die über einen drehfest mit der Ankerwelle des Elektromotors verbundenen Kommutator gleiten und somit ein wechselndes Magnetfeld erzeugen. Zum Erfassen der Motordrehzahl ist ein drehfest mit der Ankerwelle des Elektromotors verbundener, mehrpoliger Ringmagnet vorgesehen, wobei das durch Rotation des Ringmagneten wechselnde Magnetfeld mit Hilfe eines Hall-Sensors detektiert wird, der auf einer Leiterplatte angeordnet ist. Auf dieser Leiterplatte befindet sich zur Verarbeitung der Hall-SensorSignale zusätzlich zu dem Hall-Sensor u.a. ein µ-Controller.

Während des Betriebs des Elektromotors entstehen aufgrund unterschiedlichster Phänomene verschiedene Arten von Abrieb. Bestandteile dieses Abriebs sind dabei Graphitstaub von den Schleifkontakten und Kupferspäne vom Kommutator. Hierbei handelt es sich um elektrisch leitfähige Stoffe, die sich auf der Leiterplatte ablagern und in der Folge einen Kurzschluss verursachen können.

### Offenbarung der Erfindung Technische Aufgabe

Der Erfindung liegt daher die Aufgabe zugrunde, einen Elektromotor vorzuschlagen, bei dem das Kurzschlussrisiko minimiert ist. Weiterhin besteht die Aufgabe darin, einen Schleifkontakthalter für einen Elektromotor vorzuschlagen, mit dem sich das Kurzschlussrisiko minimieren lässt.

### Technische Lösung

Diese Aufgabe wird hinsichtlich des Elektromotors mit den Merkmalen des Anspruchs 1 und hinsichtlich des Schleifkontakthalters mit den Merkmalen des Anspruchs 10 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, zum Schutz der Leiterplatte, genauer zum Schutz von elektrischen Leitungen und/oder elektronischen Bauteilen auf der Leiterplatte, eine Schutzwand vorzusehen und diese in einem Bereich zwischen der Leiterplatte und dem Kommutator anzuordnen, derart, dass die Schutzwand ein Auftreffen zumindest eines Teils des von dem Kommutator in Richtung der Leiterplatte beschleunigten Abriebs, insbesondere von Kohlestaub und/oder Metallspänen, auf der Leiterplatte verhindert. Bevorzugt ist die Schutzwand derart ausgebildet und angeordnet, dass sie zumindest einen Teil des Abriebs aus seiner ursprünglichen Bewegungsrichtung ablenkt und somit die Leiterplatte, zumindest weitgehend, vor einem Verschmutzen schützt, wodurch Kurzschlüsse sicher verhindert werden können. Insbesondere verhindert die Leiterplatte, dass der Abrieb auf direktem Weg zur Leiterplatte gelangen kann. Bevorzugt ist die Leiterplatte derart ausgebildet und angeordnet, dass zumindest ein Teil des Abriebs von dieser in Richtung der Ankerwicklung umgelenkt wird. Eine daraus resultierende, stärkere Verschmutzung der Ankerwicklung ist unproblematisch, da der Wicklungsdraht isoliert und somit ein Kurzschluss nicht zu erwarten ist.

In Weiterbildung der Erfindung ist mit Vorteil vorgesehen, dass auf der Leiterplatte eine Sensorelektronik für einen, vorzugsweise ebenfalls auf der Leiterplatte angeordneten, Magnetfeldsensor vorgesehen ist. Dabei dient der Magnetfeldsensor vorzugsweise zum Erfassen eines wechselnden Magnetfeldes, das durch Rotation eines drehfest mit der Ankerwelle verbundenen Magnetelementes verursacht wird. Bei dem Magnetfeldsensor kann es sich beispielsweise um einen Reed-Kontakt oder einen Hall-Sensor handeln. Insbesondere dann, wenn Aussagen über den Drehwinkel gemacht werden sollen, ist es vorteilhaft, mehrere, vorzugsweise in Umfangsrichtung beabstandete, Magnetfeldsensoren vorzusehen. Von besonderem Vorteil ist eine Ausführungsform, bei der die Sensorelektronik einen µ-Controller und/oder eine alternative Logikeinheit zum Auswerten der Signale des mindestens einen Magnetfeldsensors umfasst. Bevorzugt kann mit Hilfe der Sensorelektronik die Drehzahl der Ankerwelle des Elektromotors ermittelt werden, wobei zur ausschließlichen Drehzahlermittlung ein einziger Magnetfeldsensor ausreicht. Durch das Vorsehen einer Schutzwand in einem Bereich zwischen dem Kommutator und der Leiterplatte können Fehlfunktionen der Sensorelektronik vermieden werden, die ohne die Schutzwand aufgrund von Kurzschlüssen etc. auftreten könnten.

Von besonderem Vorteil ist eine Ausführungsform, bei der die Schutzwand, zumindest abschnittsweise, in einem Bereich radial zwischen der Sensorelektronik und dem Kommutator angeordnet ist. Um eine möglichst große Schutzwirkung zu entfalten, befindet sich die Leiterplatte bei der beschriebenen Anordnung bevorzugt in axialer Richtung in Bezug auf die Ankerwelle betrachtet auf derselben Höhe wie der Kommutator, so dass die Schutzwand, insbesondere unmittelbar, in radialer Richtung abgelenkten Abrieb abfangen kann.

Besonders zweckmäßig ist es, wenn sich die Schutzwand, in axialer Richtung betrachtet, bis über den Kommutator hinaus erstreckt. Bevorzugt erstreckt sich die Schutzwand in axialer Richtung bis zu einem Spalt zwischen dem Kommutator und einem drehfest mit der Ankerwelle verbundenen, mit einem, vorzugsweise auf der Leiterplatte angeordneten, Magnetfeldsensor zusammenwirkenden Magnetelement. Besonders bevorzugt ist es, wenn sich die Schutzwand in axialer Richtung bis mindestens zur Spaltmitte erstreckt, um auch nicht geradlinig in radialer Richtung beschleunigten Abrieb abfangen zu können.

Von besonderem Vorteil ist eine Ausführungsform, bei der die Schutzwand den Spalt zwischen dem Kommutator und dem Magnetelement überbrückt, also in axialer Richtung zumindest bis zu der dem Kommutator zugewandten Stirnseite des Magnetelementes reicht. Hierdurch ist es möglich, ein Maximum an Abrieb an dem Auftreffen auf der Leiterplatte zu hindern.

In Weiterbildung der Erfindung ist mit Vorteil vorgesehen, dass die Schutzwand an einem Schleifkontakthalter (Bürstenhalter) des Elektromotors angeordnet ist. Bevorzugt ist dabei eine Ausführungsform, bei der die Schutzwand einteilig mit dem Schleifkontakthalter ausgebildet ist. Bei dieser Ausführungsform wird auf ein separates, die Montage verkomplizierendes, separates Bauteil verzichtet. Selbstverständlich ist auch eine Ausführungsform realisierbar, bei der die Schutzwand als von dem Schleifkontakthalter separates Bauteil ausgebildet ist, das an dem Schleifkontakthalter, beispielsweise durch Verrasten, festlegbar ist. Bevorzugt ist es, die Schutzwand aus Kunststoff, insbesondere als Spritzgussteil, auszubilden.

Im Hinblick auf die Anordnung der Schutzwand an dem Schleifkontakthalter gibt es unterschiedliche Möglichkeiten. Bevorzugt ist es, die Schutzwand (ggf. ausschließlich) an einem ersten Haltearm für einen Schleifkontakt festzulegen bzw. einstückig mit diesem auszubilden. Die Haltearme können beispielsweise die Funktion des Tragens eines Lagers für die Ankerwelle und/oder des Tragens eines Schleifkontaktes und/oder einer Schleifkontaktfeder haben. Bevorzugt wird die Schutzwand dabei derart angeordnet, dass diese ein radiales, elastisches Aufbiegen des ersten Haltearms und vorzugsweise auch eines zweiten Halterarms zu Montagezwecken nicht verhindert.

Um eine möglichst große Schutzwirkung gegen den Abrieb zu entfalten, ist eine Ausführungsform bevorzugt, bei der sich die Schutzwand, ausgehend von dem ersten Haltearm, in Umfangsrichtung hin zu einem zweiten Haltearm erstreckt. Bevorzugt erstreckt sich die Schutzwand bis zu diesem zweiten Haltearm oder sogar in Umfangsrichtung über diesen hinaus. Dabei ist es möglich, die Schutzwand zusätzlich oder alternativ zu dem ersten Haltearm am zweiten Haltearm festzulegen oder einstückig mit diesem auszubilden. Insbesondere beim Festlegen oder einstückigen Ausbilden der Schutzwand mit beiden Haltearmen ist darauf zu achten, dass eine einfache Montage des Schleifkontakthalters trotz des Vorsehens der Schutzwand weiterhin ermöglicht wird. Insbesondere sollte ein elastisches, radiales Aufbiegen der Haltearme, zumindest in einem axial vorderen Abschnitt, zu Montagezwecken weiterhin gewährleistet werden.

Die Erfindung führt ferner auf einen Schleifkontakthalter für einen Elektromotor, vorzugsweise für einen zuvor beschriebenen Elektromotor, wobei der Schleifkontakthalter zum Halten mindestens eines mit einem Kommutator des Elektromotors zusammenwirkenden Schleifkontaktes ausgebildet ist. Erfindungsgemäß ist vorgesehen, dass an dem Schleifkontakthalter eine Schutzwand vorgesehen ist, wobei die Schutzwand derart ausgebildet und angeordnet ist, dass sie sich im montierten Zustand des Schleifkontakthalters im Elektromotor zwischen dem Kommutator und einer Leiterplatte, vorzugsweise einer Leiterplatte mit einer Sensorelektronik, befindet. Im Hinblick auf mögliche Ausführungsformen des Schleifkontakthalters, beispielsweise auf die einstückige Ausbildung der Schutzwand mit einem ersten Haltearm, wird zur Vermeidung von Wiederholungen auf die vorhergehende Beschreibung verwiesen, in der der Schleifkontakthalter im Zusammenhang mit dem Elektromotor beschrieben wurde.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine teilweise Darstellung eines Elektromotors mit einer drehfest mit der Ankerwelle verbundenen Getriebeschnecke,
- Fig. 2:: die Ankerwelle aus Fig. 1 mit daran festgelegten Elektromotorkomponenten,
- Fig. 3:: eine Darstellung der Leiterplatte aus Fig. 1 in einer Ansicht von unten und
- Fig. 4:: eine vergrößerte Darstellung des Schleifkontakthalters gemäß Fig. 1 mit einstückig ausgebildeter Schutzwand.

### Ausführungsformen der Erfindung

In den Figuren sind gleiche Bauteile und Bauteile mit der gleichen Funktion mit den gleichen Bezugszeichen gekennzeichnet.

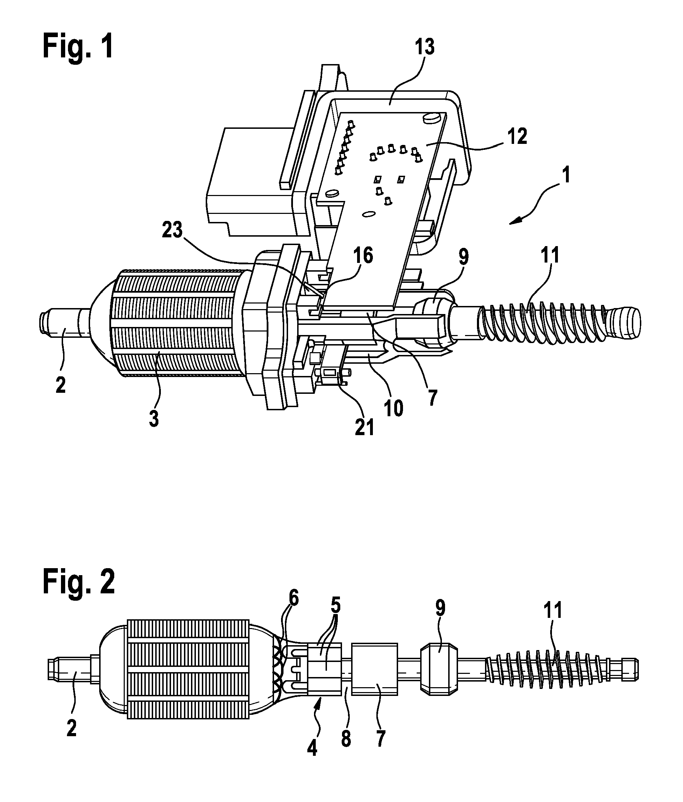

In Fig. 1 sind wesentliche Bestandteile eines als Fensterhebermotor ausgebildeten Elektromotors 1 gezeigt. Zu erkennen ist eine Ankerwelle 2 mit drehfest daran festgelegtem Ankerpaket 3. Nicht gezeigt sind mit dem Ankerpaket 3 in an sich bekannter Weise zusammenwirkende, in einem ebenfalls nicht gezeigten Polgehäuse in an sich bekannter Weise angeordnete, Permanentmagnete.

Wie aus Fig. 2 hervorgeht, schließt in axialer Richtung an das Ankerpaket 3 ein Kommutator 4 an, der mehrere in Umfangsrichtung beabstandete und elektrisch voneinander isolierte Metallsegmente 5 (hier Kupfersegmente) aufweist. Die Metallsegmente 5 sind über diesen zugeordnete Leitungen 6 mit dem Ankerpaket 3, genauer mit der Ankerwicklung, elektrisch leitend verbunden. Während des Betriebs des Elektromotors 1 gleiten auf den Metallsegmenten 5 am Außenumfang des Kommutators 4 zwei um 180° in Umfangsrichtung versetzt angeordnete Schleifkontakte 21 (Kohlebürsten), die die Metallsegmente 5 elektrisch kontaktieren.

Mit Axialabstand zu dem Kommutator 4 ist ein ringförmiges Magnetelement 7 mit in Umfangsrichtung wechselnden Polaritäten angeordnet. Zur reinen Drehzahlermittlung reicht auch ein einfacher am Umfang des Magnetelementes 7 angeordneter Magnet bzw. eine einzige ortsfeste Polarität aus. Axial zwischen dem Kommutator 4 und dem Magnetelement 7 befindet sich ein sich in Umfangsrichtung um die Ankerwelle 2 erstreckender, axialer Spalt 8.

Mit Axialabstand zu dem ringförmigen Magnetelement 7 ist ein Radiallager 9 angeordnet, mit dem die Ankerwelle 2 im in Fig. 1 gezeigten Schleifkontakthalter 10 gelagert ist.

Mit Axialabstand zu dem Radiallager 9 ist wiederum eine globoidförmige Getriebeschnecke 11 vorgesehen, die im drehmomentübertragenden Eingriff mit einem nicht gezeigten Abtriebsrad ist, welches wiederum einen Seilzug zum Verstellen eines ebenfalls nicht gezeigten Kraftfahrzeugfensters antreibt.

Wie aus Fig. 1 hervorgeht, befindet sich in einem Bereich radial außerhalb des in Fig. 1 nicht erkennbaren, verdeckten Kommutators 4 eine Leiterplatte 12, die sich in axialer Richtung, ausgehend von dem Kommutator 4, bis über das Magnetelement 7 hinaus erstreckt. Die Leiterplatte 12 erstreckt sich in tangentialer Richtung bis zu einem mit Radialabstand zu der Ankerwelle 2 angeordneten Halter 13 für die Leiterplatte 12. Die Leiterplatte 12 ist in Fig.1 in einer Ansicht von unten gezeigt.

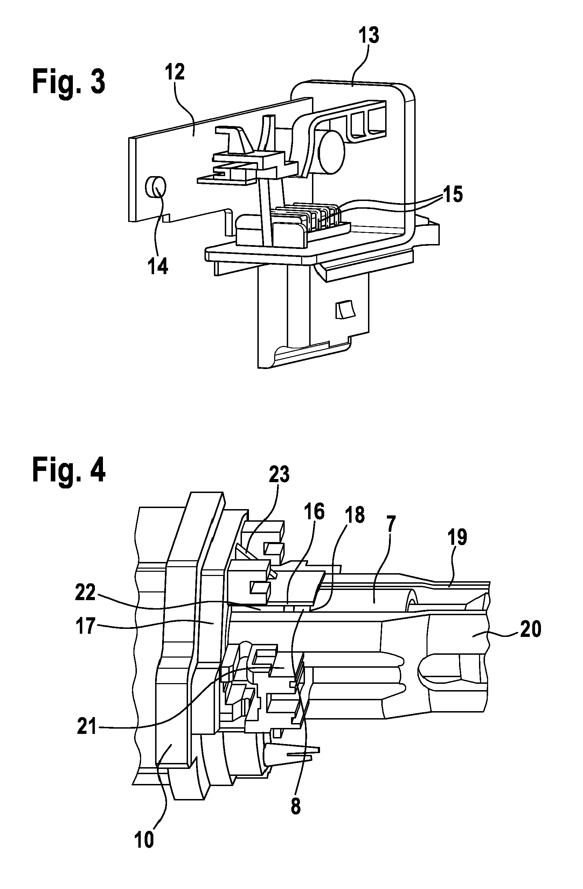

Wie sich aus Fig. 3 ergibt, befindet sich auf der Oberseite der Leiterplatte 12 ein Magnetfeldsensor 14 (hier ein Hall-Sensor), der elektrisch und signalleitend mit einer nicht gezeigten, ebenfalls auf der Oberseite der Leiterplatte 12 befindlichen Sensorelektronik verbunden ist, wobei die Sensorelektronik in dem gezeigten Ausführungsbeispiel einen µ-Controller zum Auswerten der Sensorsignale umfasst. Die Sensorelektronik ist Bestandteil einer ebenfalls auf der Leiterplatte 12 angeordneten Steuerelektronik zum Ansteuern des Elektromotors 1. Die Leiterplatte 12 ist im montierten Zustand derart angeordnet, dass sich der Magnetfeldsensor 14 radial außerhalb des Magnetelementes 7, mit geringem Abstand zu diesem, befindet, um das durch Rotation wechselnde Magnetfeld detektieren zu können. Die nicht gezeigte Sensorelektronik ist in dem gezeigten Ausführungsbeispiel zum Ermitteln der Drehzahl der Ankerwelle 2 ausgebildet. Wie sich aus Fig. 3 ergibt, ist die Leiterplatte 12 über Drahtanschlüsse 15 kontaktiert.

Während des Betriebs des Elektromotors 1 kommt es insbesondere aufgrund des Reibkontaktes zwischen den Schleifkontakten 21 und dem Kommutator 4, genauer den Metallsegmenten 5, zu Abrieb. Dieser besteht weitgehend aus Graphitstaub und Metallspänen, die von den Metallsegmenten 5 des Kommutators 4 abgerieben werden. Durch die Rotation des Kommutators 4 wird dieser Abrieb radial nach außen geschleudert, u. a. in Richtung auf die Oberseite der Leiterplatte 12 zu, also in Richtung auf die nicht gezeigte Sensorelektronik. Um zu verhindern, dass durch Rotation des Kommutators 4 verursachter Abrieb unmittelbar, also auf direktem Weg, auf die Leiterplatte 12 geschleudert wird und dort einen Kurzschluss verursacht, ist eine Schutzwand 16 vorgesehen. Diese befindet sich radial zwischen dem Kommutator 4 und der Leiterplatte 12. Die Schutzwand 16 ist aus Kunststoff ausgebildet und einstückig als Kunststoffspritzgussteil mit dem Schleifkontakthalter 10 (vgl. Fig. 4) hergestellt. Wie sich insbesondere aus Fig. 4 ergibt, erstreckt sich die Schutzwand 16 in axialer Richtung, ausgehend von einer Grundplatte 17 des Schleifkontakthalters 10, die von der Ankerwelle 2 senkrecht durchsetzt wird, bis über das dem Kommutator 4 zugewandte axiale Ende 18 des Magnetelementes 7 hinaus, also in axialer Richtung bis zu einer Position, die sich unmittelbar radial außerhalb des Magnetelementes 7 befindet. Dabei überdeckt die Schutzwand 16 den Kommutator 4 sowie den axialen, umlaufenden Spalt 8 zwischen dem Kommutator 4 und dem ringförmigen Magnetelement 7. In axialer Richtung überragt wird die Schutzwand 16 von einem ersten und einem zweiten Haltearm 19, 20, die im Bereich ihrer freien Enden das Radiallager 9 tragen. Die sich gegenüberliegenden Haltearme 19, 20 tragen zusätzlich in einem unteren Bereich auf axialer Höhe der Schutzwand 16 jeweils einen Schleifkontakt 21 zur unmittelbaren elektrischen Kontaktierung des Kommutators 4. Die Schleifkontakte 21 werden in axialer Richtung radial außen von der Schutzwand 16 überragt.

In dem gezeigten Ausführungsbeispiel ist die in Umfangsrichtung leicht gebogen ausgeformte Schutzwand 16 ausschließlich an den ersten Haltearm 19 angeformt und erstreckt sich in Umfangsrichtung näherungsweise bis zum zweiten Haltearm 20. Mit diesem ist die Schutzwand 16 nicht unmittelbar verbunden, sondern es befindet sich zwischen der Schutzwand 16 und dem zweiten Haltearm 20 eine minimale, sich in axialer Richtung erstreckende Lücke 22. Dadurch, dass die Schutzwand 16 nur an einem der beiden Haltearme 19, 20 festgelegt ist, können diese zu Montagezwecken elastisch radial nach außen aufgebogen werden. Es ist auch eine Ausführungsform realisierbar, bei der die Schutzwand 16 an beiden Haltearmen 19, 20 festgelegt oder einstückig mit diesen ausgebildet ist.

Durch das Vorsehen der sich in axialer Richtung hin zum Magnetelement 7 über den Kommutator 4 hinaus erstreckenden Schutzwand 16, die sich in Umfangsrichtung von dem ersten Haltearm 19 bis in unmittelbarer Nähe des zweiten Haltearms 20 erstreckt, wird in radialer Richtung auf die Schutzwand 16 auftreffender Abrieb nach radial innen umgelenkt, wodurch ein unmittelbares Auftreffen dieses Abriebs auf der Oberseite der Leiterplatte 12, genauer auf der Sensorelektronik, vermieden wird, wodurch die Standzeit des Elektromotors 1 wesentlich erhöht ist.

Wie sich insbesondere aus Fig. 4 ergibt, ist die Schutzwand 16 auf der von dem Kommutator 4 abgewandten Seite mittels einer einstückig mit der Schutzwand 16 ausgebildeten und sich senkrecht zu dieser erstreckenden Stütze 23 gestützt. Die Stütze 23 stützt sich dabei an der Grundplatte 17 ab.

## Patentansprüche

1. Elektromotor, insbesondere für Kraftfahrzeuganwendungen, vorzugsweise Fensterhebermotor, mit einem drehfest auf einer Ankerwelle (2) angeordneten Kommutator (4) und mit einer Leiterplatte (12),
**dadurch gekennzeichnet,**
**dass** zwischen dem Kommutator (4) und der Leiterplatte (12) eine Schutzwand (16) angeordnet ist.

2. Elektromotor nach Anspruch 1,
**dadurch gekennzeichnet,**
**dass** auf der Leiterplatte (12) eine Sensorelektronik für einen, vorzugsweise auf der Leiterplatte (12) angeordneten, Magnetfeldsensor (14) angeordnet ist.

3. Elektromotor nach Anspruch 2,
**dadurch gekennzeichnet,**
**dass** die Schutzwand (16), zumindest abschnittsweise, radial zwischen der Sensorelektronik und dem Kommutator (4) angeordnet ist.

4. Elektromotor nach einem der vorhergehenden Ansprüche,
**dadurch gekennzeichnet,**
**dass** drehfest mit der Ankerwelle (2) ein, vorzugsweise ringförmiges, Magnetelement (7) verbunden ist.

5. Elektromotor nach Anspruch 4,
**dadurch gekennzeichnet,**
**dass** sich die Schutzwand (16) in axialer Richtung über den Kommutator (4) hinaus erstreckt.

6. Elektromotor nach einem der Ansprüche 4 oder 5,
**dadurch gekennzeichnet,**
**dass** sich die Schutzwand (16) axial über den Spalt (8) hinaus bis zum Magnetelement (7) erstreckt.

7. Elektromotor nach einem der vorhergehenden Ansprüche,
**dadurch gekennzeichnet,**
**dass** die Schutzwand (16) an einem Schleifkontakthalter (10) festgelegt oder einstückig mit diesem ausgebildet ist.

8. Elektromotor nach Anspruch 7,
**dadurch gekennzeichnet,**
**dass** die Schutzwand (16) an einem sich in axialer Richtung erstreckenden ersten Haltearm (19) festgelegt oder einstückig mit diesem ausgebildet ist.

9. Elektromotor nach Anspruch 8,
**dadurch gekennzeichnet,**
**dass** sich die Schutzwand (16), ausgehend von dem ersten Haltearm (19) hin zu einem, vorzugsweise bis zu einem, in Umfangsrichtung beabstandeten, sich in axialer Richtung erstreckenden, zweiten Haltearm (20) erstreckt.

10. Schleifkontakthalter (10) für einen Elektromotor (1), insbesondere für einen Elektromotor (1), nach einem der vorhergehenden Ansprüche, zum Halten mindestens eines mit einem Kommutator (4) zusammenwirkenden Schleifkontaktes (21),
**dadurch gekennzeichnet,**
**dass** eine Schutzwand (16) an einer Position vorgesehen ist, die sich im montierten Zustand des Schleifkontakthalters (10) zwischen dem Kommutator (4) und einer Leiterplatte (12) befindet.
